(19) Europäisches Patentamt / European Patent Office / Office européen des brevets

(11) **EP 3 134 557 B1**

(12) **FASCICULE DE BREVET EUROPEEN**

(45) Date de publication et mention de la délivrance du brevet:
**01.01.2020 Bulletin 2020/01**

(21) Numéro de dépôt: **15716853.5**

(22) Date de dépôt: **22.04.2015**

(51) Int Cl.:
*C22B 1/248* (2006.01)     *B01J 21/00* (2006.01)
*B01J 23/00* (2006.01)

(86) Numéro de dépôt international:
**PCT/EP2015/058721**

(87) Numéro de publication internationale:
**WO 2015/162179 (29.10.2015 Gazette 2015/43)**

(54) **TABLETTE COMPACTÉE À BASE D'OXYDES MÉTALLIQUES ET PROCÉDÉ DE FABRICATION ASSOCIÉ**

KOMPAKTER METALLOXIDBLOCK UND ZUGEHÖRIGES HERSTELLUNGSVERFAHREN

COMPACT METAL OXIDE BLOCK, AND RELATED MANUFACTURING METHOD

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **22.04.2014 FR 1453619**

(43) Date de publication de la demande:
**01.03.2017 Bulletin 2017/09**

(73) Titulaire: **Eurotab**
**42170 Saint Just Saint Rambert (FR)**

(72) Inventeurs:
• COENRAETS, Christian
  F-78110 Le Vesinet (FR)
• DUPONT, Christophe
  F-42170 St Just St Rambert (FR)
• KIRCHHOFF, Laurent
  F-42170 St Just St Rambert (FR)

(74) Mandataire: **Regimbeau**
**87 rue de Sèze**
**69477 Lyon Cedex 06 (FR)**

(56) Documents cités:
EP-A1- 0 466 160    EP-A1- 0 466 160
DE-B- 1 182 847

• D H Hubble: "3.1 Classification of Refractories Steel Plant Refractories", 900 600 300 Tin Lead Zinc Aluminum Copper Nickel Iron, 1 janvier 1999 (1999-01-01), XP55203303, Extrait de l'Internet: URL:http://202.201.32.4/upload/20120523/20 120523180857439.pdf [extrait le 2015-07-17]
• SARKAR S K ET AL: "Preparation, temperature and composition dependence of some physical and electrical properties of mixtures within the nickel oxide- manganese oxide (NiO-Mn3O4) system", JOURNAL OF MATERIALS SCIENCE, KLUWER ACADEMIC PUBLISHERS, DORDRECHT, vol. 19, no. 2, 1 janvier 1984 (1984-01-01), pages 545-551, XP009185432, ISSN: 0022-2461
• D H Hubble: "3.1 Classification of Refractories Steel Plant Refractories", 900 600 300 Tin Lead Zinc Aluminum Copper Nickel Iron, 1 January 1999 (1999-01-01), XP055203303, Retrieved from the Internet: URL:http://202.201.32.4/upload/20120523/20 120523180857439.pdf [retrieved on 2015-07-17]

**Description**

DOMAINE DE L'INVENTION

La présente invention concerne les produits compacts à base d'oxydes métalliques ainsi que la fabrication de tels produits compacts à base d'oxydes métallique, permettant notamment le recyclage des déchets et sous-produits issus de l'industrie, par exemple de l'industrie sidérurgique.

ETAT DE LA TECHNIQUE

Certaines industries, et en particulier l'industrie sidérurgique, connaissent une forte croissance, avec des productions de plus en plus importantes, et une génération de déchets industriels qui va donc également en augmentant. De tels déchets industriels sont souvent stockés en masse, ce qui nuit à l'environnement et génère des coûts, poussant ainsi les industriels à les revaloriser.

Les déchets à base d'oxydes métalliques sont particulièrement intéressants à recycler puisqu'ils peuvent être réutilisés dans de nombreuses industries, comme par exemple dans la sidérurgie, le traitement des gaz, le traitement des eaux et des boues, l'agriculture, la construction et le génie civil. De tels composés à base d'oxydes métalliques peuvent être utilisés directement sous la forme de fines, les fines étant des particules de taille généralement inférieures à 10 mm et typiquement inférieure à 6 mm, mais leur manipulation et leur stockage ne sont pas aisés. Ainsi, les industriels privilégient des produits à base d'oxydes métalliques sous une forme condensée et solide.

Par exemple dans l'industrie sidérurgique ou métallurgique, les composés à base d'oxydes métalliques sont facilement réutilisables s'ils sont sous une forme compacte, c'est pourquoi il est de coutume de recourir à l'agglomération des fines de composés d'oxydes métalliques afin d'en augmenter la taille et la densité.

Il existe des équipements et technologies qui permettent de prendre en charge, collecter et traiter les fines de composés d'oxydes métalliques. Toutefois, la mise en forme de ces fines en des produits sous une forme condensée et solide qui facilite leur traitement et leur recyclage est plus problématique.

A cet égard, il a été développé un certain nombre de techniques différentes mais aucune n'est aujourd'hui réellement satisfaisante, notamment parce qu'elle est complexe à mettre en oeuvre, impliquant en particulier un nombre important d'étapes de fabrication, et/ou parce qu'elle nécessite une utilisation de produits complémentaires pour former ces produits condensés et solides, ces produits complémentaires venant souvent nuire au recyclage en tant que tel des composés d'oxydes métalliques. Par exemple, ils peuvent poser des problèmes de compatibilité avec l'application finale du produit condensé.

Parmi les techniques de mise en forme de ces fines, nous pouvons citer la pelletisation, à froid ou à chaud. La pelletisation nécessite que le matériau de base soit broyé finement jusqu'à ce que la plupart des particules broyées aient une granulométrie centrée, et compatible avec ce procédé de mise en forme, typiquement inférieure à 1 millimètre, et en général de l'ordre de quelques micromètres. Ce procédé nécessite également le recours à des additifs et/ou des liants, ce qui impose des opérations de séchage, et ce qui vient surtout nuire à l'utilisation finale du produit. De plus, du fait de la faible résistance mécanique des pellets et de leur importante friabilité, ce procédé génère de nouveau des fines, lesquelles nuisent également à l'utilisation finale. En outre, un tel procédé est coûteux, ce coût ne pouvant justifier l'utilisation d'un tel procédé de recyclage au niveau industriel du fait des inconvénients qui lui sont en outre associés.

Une autre technique de fabrication, appelée briquetage, consiste à fabriquer des briquettes en compactant les fines sur une presse à rouleaux tangentiels. Les rouleaux sont généralement des cylindres dotés de cavités formant des moules correspondant sensiblement à la forme et aux dimensions souhaitées pour la briquette. La fabrication de briquettes par presse tangentielle permet la prise en charge de poudres ne nécessitant généralement pas de broyage supplémentaire, avec des dimensions plus importantes que pour la pelletisation, en général de plusieurs millimètres. Cependant, il est une fois encore nécessaire que la majorité des particules à compacter aient une granulométrie centrée sur une valeur déterminée et qu'il n'y ait pas un écart de granulométrie important. En outre, l'ajout d'additifs de liaison est également inévitable et en quantité bien supérieure à celle utilisée dans la pelletisation. Ces additifs nuisent à l'utilisation finale du produit notamment dans le domaine de la fabrication d'acier. Par ailleurs, ces briquettes doivent subir des traitements spécifiques complémentaires afin d'augmenter leur dureté et améliorer leurs propriétés mécaniques. En plus de la complexité inhérente à ce procédé de fabrication, il génère en lui-même un taux de déchets important puisqu'il y a notamment une perte de la composition à compacter au niveau de l'entre-ferre.

Outre les inconvénients mentionnés ci-dessus, et sauf à utiliser une quantité importante de liants, les procédés de pelletisation et de briquetage ne permettent pas de former des produits présentant une résistance mécanique suffisante, pour pouvoir notamment transporter et manipuler ces produits sans générer des fines et des poussières, c'est-à-dire sans les dégrader. D'une manière générale, c'est la présence de macrodéfauts sur ces produits, notamment les briquettes, qui est à l'origine de ces moins bonnes propriétés mécaniques. Par macrodéfauts, on entend tout type de fissures, cracks, plan de clivage et analogue observable à l'œil nu, par inspection visuelle ou par simple microscopie et également par microscopie électronique à balayage (MEB). Du fait de la faible qualité des compacts formés par ces procédés, on estime que le rendement des procédés de pelletisation et de briquetage est inférieur à 50% tant il y a de compacts inutilisables en sortie de ces procédés.

Comme on l'a indiqué, les procédés connus de pelletisation et de briquetage nécessitent des additifs pour augmenter la résistance et la durabilité des produits à base d'oxydes métalliques, ces additifs étant par exemple le bitume, le goudron, le silicate de sodium ou encore des résidus de sulfites alcools. Outre le fait que cet ajout d'additifs n'est généralement pas suffisant en tant que tel pour améliorer correctement la résistance mécanique du produit, ils sont néfastes pour l'utilisation ultérieure du produit, pouvant notamment entrainer une réaction chimique avec les oxydes métalliques présents.

Les documents US 4,917,723 et EP 2 298 941 illustrent des exemples de fabrication de tels produits condensés avec des procédés complexes, nécessitant notamment un broyage des particules avant de pouvoir former le produit condensé. Il est en outre nécessaire de combiner les composés d'oxydes de fer à d'autres matériaux pour que le produit puisse être formé, qu'il reste cohésif, et qu'il présente une résistance satisfaisante pour sa manipulation. Les documents DE 24 18 555, DE 24 31 983 ou EP 0 466 160 décrivent également des exemples de techniques de mise en forme de fines de composés d'oxydes métalliques, qui nécessitent obligatoirement d'avoir recours à des liants pour que le produit formé ait une cohésion suffisante pour pouvoir être manipulé. C'est le cas également de la publication de 1999 de D.H. Hubble dans le chapitre 3 intitulé « Steel Plant Refractories » de « The AISE Steel Foundation ».

Un but de la présente invention est de proposer un procédé de fabrication de tablettes à base d'oxydes métalliques qui résout au moins l'un des inconvénients ci-dessus, et un nouveau produit condensé à base d'oxydes métalliques.

En particulier un but de la présente invention est de proposer un produit compact contenant un ou plusieurs composés d'oxydes métalliques et se distinguant des produits sous forme de briquettes et pellets connus à ce jour par une très nette amélioration de la résistance mécanique.

Un autre but de la présente invention est de proposer un procédé de fabrication simplifié d'un produit compact à base d'oxydes métalliques qui présente une résistance mécanique accrue. De manière avantageuse, le procédé proposé permet en outre une production répondant à des cadences industrielles.

EXPOSE DE L'INVENTION

A cette fin, on propose une composition telle que définie à la revendication 1 et dans les revendications qui en dépendent.

Des aspects préférés mais non limitatifs de cette composition, pris seuls ou en combinaison, sont les suivants :

- la composition est formée d'un unique type d'oxyde métallique.
- les oxydes métalliques sont sous forme de particules ayant un diamètre d90 inférieur ou égal à 3 mm.
- le métal M est choisi parmi le fer, l'aluminium, le titane, le manganèse, le zinc, le cuivre, le zirconium, le nickel et le plomb.
- La composition consiste en un mélange d'oxyde de fer, un mélange d'oxyde d'aluminium, un mélange d'oxyde de titane, un mélange d'oxyde de manganèse, un mélange d'oxyde de zinc, un mélange d'oxyde de cuivre, un mélange d'oxyde de zirconium, un mélange d'oxyde de plomb, ou un mélange d'au moins deux des oxydes métalliques précités.
- la composition a une résistance au test de chute inférieure à 10%, et de préférence encore inférieure à 5%.
- la tablette compactée présente une porosité apparente comprise entre 5% et 30%, et de préférence comprise entre 10% et 25%.
- la composition consiste en un mélange d'oxyde de manganèse uniquement, ladite composition étant sous forme d'une tablette compactée de forme tridimensionnelle ayant une densité apparente comprise entre 2 et 5, de préférence entre 2,8 et 4,2.
- la composition consiste en en un mélange d'oxyde de fer uniquement, ladite composition étant sous forme d'une tablette compactée de forme tridimensionnelle ayant une densité apparente comprise entre 2 et 5 de préférence entre 2,8 et 4,4.
- la composition consiste en un mélange d'oxyde de manganèse dans une quantité supérieure à 50% en masse avec un mélange d'un ou plusieurs autres types d'oxyde métallique.
- la composition consiste en un mélange d'oxyde de fer dans une quantité supérieure à 50% en masse avec un mélange d'un ou plusieurs autres types d'oxyde métallique.
- les oxydes métalliques sont sous forme de particules ayant des diamètres selon une distribution granulométrique aléatoire dans laquelle le rapport entre les diamètres équivalents de particules de plus grande taille et de plus petite taille est supérieur à 50.

On propose également un produit compacté ayant une structure multicouches, où chaque couche formant la structure multicouches est une tablette compactée telle que proposée.

On propose en outre un procédé de fabrication d'une tablette compactée à base d'un ou plusieurs oxydes métalliques avec une presse rotative à poinçons, comprenant les étapes suivantes :

E1. Prélèvement d'une composition consistant en un mélange d'un ou plusieurs oxydes métalliques de formule MxOyUi, dans laquelle M est un atome métallique choisi parmi les métaux pauvres et les métaux de transition, de préférence à l'exclusion du chrome, O est un atome d'oxygène, et U est une impureté, où x, y, i sont des fractions molaires comprises entre 0 et 1 avec x+y>80% ;

E2. Placement de ladite composition dans un espace confiné entre deux poinçons ;

E3. Compaction de ladite composition par rapprochement des poinçons exerçant une contrainte de compaction sur la composition afin de former une tablette compactée de forme tridimensionnelle, la contrainte de compaction consistant à appliquer sur la composition une pression de compaction comprise entre 200 MPa et 800 MPa;

E4. Relâchement de la contrainte de compaction par éloignement des poinçons.

Des aspects préférés mais non limitatifs de cette composition pris seuls ou en combinaison, sont les suivants :

- à l'étape E3 de compaction, la contrainte de compaction consiste à appliquer une pression de compaction déterminée sur la composition, la pression de compaction étant comprise entre 200 MPa et 650 MPa, de manière préférentielle comprise entre 300 MPa et 500 MPa, et de manière encore plus préférentielle comprise entre 350 MPa et 450 MPa.
- à l'étape E3 de compaction, la contrainte de compaction consiste à maintenir la composition à un volume de compaction déterminé pendant une durée déterminée, le volume de compaction étant maintenu pendant une durée comprise entre 100 ms et 5000 ms, et de préférence comprises entre 500 ms et 1000 ms.
- les particules d'oxydes métalliques de l'étape E1 sont prélevées directement parmi des déchets industriels d'oxydes métalliques sans traitement préalable.
- à l'étape E1, on prélève une composition comprenant des particules d'un unique type d'oxyde métallique.
- à l'étape E1, on prélève une composition consistant en un mélange d'oxyde de manganèse uniquement.
- à l'étape E1, on prélève une composition consistant en un mélange d'oxyde de fer uniquement.
- les particules d'oxydes métalliques de l'étape E1 sous forme de particules ayant une distribution granulométrique aléatoire.
- les particules d'oxydes métalliques de l'étape E1 ont des diamètres tels que le rapport entre les diamètres équivalents de particules de plus grande taille et de plus petite taille est supérieur à 50.
- dans laquelle les particules d'oxydes métalliques de l'étape E1 sous forme de particules ayant un diamètre d90 inférieur ou égal à 3 mm.

Selon un aspect préféré, le procédé présenté est utilisé pour la fabrication d'un produit compacté ayant une structure multicouches, dans lequel chaque couche formant la structure multicouches est formée en effectuant successivement les étapes E1, E2, E3 et E4, où chaque nouvelle couche est formée sur la tablette compactée à l'étape précédente.

Le processus spécifique de fabrication peut être par exemple le suivant :

- On forme une première couche en effectuant les étapes E1, E2, E3 et E4 avec une première composition pour créer une première tablette compactée ;
- On forme une couche complémentaire en effectuant les étapes E1, E2, E3 et E4 où :

  ◦ A l'étape E1, on prélève une composition complémentaire consistant en un mélange d'un ou plusieurs oxydes métalliques,
  ◦ A l'étape E2, on place la composition complémentaire dans l'espace confiné entre deux poinçons sur la première tablette compactée ;
  ◦ A l'étape E3, on compacte la composition complémentaire et la première tablette compactée par rapprochement des poinçons exerçant une contrainte de compaction sur la composition afin de former une tablette compactée complémentaire sur la première tablette compactée ;

- On réitère la formation d'une couche complémentaire en fonction du nombre de couches souhaitées dans le produit compacté multicouches.

DESCRIPTION DES FIGURES

D'autres caractéristiques et avantages de l'invention ressortiront encore de la description qui suit, laquelle est purement illustrative et non limitative et doit être lue en regard des dessins annexés, sur lesquels :

- la figure 1 est une image MEB (acronyme de « Microscopie Electronique à Balayage ») à un agrandissement de 40 fois, illustrant la surface d'une briquette de Fe3O4 formée selon un procédé de l'art antérieur ;
- la figure 2 est une image MEB à un agrandissement de 40 fois, illustrant la surface d'une tablette compactée de Fe3O4 formée selon le procédé de l'invention ;
- la figure 3 est une image MEB à un agrandissement de 40 fois, illustrant l'intérieur d'une briquette de Fe3O4 formée selon un procédé de l'art antérieur ;
- la figure 4 est une image MEB à un agrandissement de 40 fois, illustrant l'intérieur d'une tablette compactée de Fe3O4 formée selon le procédé de l'invention ;
- la figure 5 est une image MEB à un agrandissement de 80 fois, illustrant l'intérieur d'une briquette de Fe3O4 formée selon un procédé de l'art antérieur ;
- la figure 6 est une image MEB à un agrandissement de 80 fois, illustrant l'intérieur d'une tablette compactée de Fe3O4 formée selon le procédé de l'invention ;
- la figure 7 est une image MEB (acronyme de « Microscopie Electronique à Balayage ») à un agrandissement de 40 fois, illustrant la surface d'une briquette de MnO formée selon un procédé de l'art antérieur ;
- la figure 8 est une image MEB à un agrandissement de 40 fois, illustrant la surface d'une tablette compactée de MnO formée selon le procédé de l'invention ;
- la figure 9 est une image MEB à un agrandissement de 40 fois, illustrant l'intérieur d'une briquette de MnO formée selon un procédé de l'art antérieur ;
- la figure 10 est une image MEB à un agrandissement de 40 fois, illustrant l'intérieur d'une tablette compactée de MnO formée selon le procédé de l'invention.

DESCRIPTION DETAILLEE DE L'INVENTION

On propose de mettre en œuvre un procédé innovant de compaction permettant de fabriquer un produit compact nouveau formé uniquement à partir de composés d'oxydes métalliques.

En effet, le produit compact qui est formé présente la particularité d'être une tablette compactée consistant en un mélange d'un ou plusieurs oxydes métalliques, c'est à dire comprenant uniquement des composés d'oxyde métallique à l'exclusion d'autres composés, en particulier à l'exclusion de liants ou de composés carbonés.

Par tablette compactée, on entend un produit compact de forme tridimensionnelle présentant des caractéristiques spécifiques en termes de porosité, de densité et de résistance notamment, choisies pour permettre une manipulation simple du produit, et un stockage au cours duquel le produit ne se dégrade pas ou peu.

Les tablettes compactées peuvent avoir des formes tridimensionnelles diverses telles qu'une forme cylindrique, octogonale, cubique, rectangulaire, ou sphérique par exemple.

Chaque oxyde métallique de la composition répond à la formule $M_xO_yU_i$, dans laquelle :

- M est un atome métallique choisi parmi les métaux pauvres et les métaux de transition, de préférence à l'exclusion du chrome,
- O est un atome d'oxygène,
- U est une impureté, et
- où x, y, i sont des fractions molaires comprises entre 0 et 1 avec x+y > 80%.

De préférence, l'oxyde métallique est tel que x+y > 85%, ou x+y > 90%, ou x+y > 95%, ou encore x+y > 99%.

On appelle métal de transition un élément chimique du bloc d du tableau périodique (table de Mendeleïev) qui n'est ni un lanthanide ni un actinide. Dans les métaux de transition excluant le chrome, on peut donc choisir parmi : Scandium (Sc), Titane (Ti), Vanadium (V), Manganèse (Mn), Fer (Fe), Cobalt (Co), Nickel (Ni), Cuivre (Cu), Zinc (Zn), Yttrium (Y), Zirconium (Zr), Niobium (Nb), Molybdène (Mo), Technétium (Tc), Ruthénium (Ru), Rhodium (Rh), Palladium (Pd), Argent (Ag), Cadmium (Cd), Hafnium (Hf), Tantale (Ta), Tungstène (W), Rhénium (Re), Osmium (Os), Iridium (Ir), Platine (Pt), Or (Au), Mercure (Hg), Rutherfordium (Rf), Dubnium (Db), Seaborgium (Sg), Bohrium (Bh), Hassium (Hs), Meitnerium (Mt), Darmstadtium (Ds), Roentgenium (Rg), Copernicium (Cn).

On appelle métal pauvre un élément chimique du bloc p du tableau périodique. Dans les métaux pauvres, on peut donc choisir parmi : Aluminium (Al), Gallium (Ga), Indium (In), Étain (Sn), Thallium (Tl), Plomb (Pb), Bismuth (Bi), Polonium (Po), Flérovium (Fl).

Parmi ces oxydes métalliques, on peut citer en particulier les oxydes de fer, oxydes d'aluminium, oxydes de titane, oxydes de manganèse, oxydes de zinc oxydes de cuivre, oxydes de zirconium, oxydes de plomb.

Dans la formule précédente, l'impureté U se définit comme un composé présent dans l'oxyde métallique qui n'a pas été volontairement introduit dans ledit oxyde métallique. En particulier, l'impureté U peut être due à la géologie de l'oxyde métallique. De manière générale, les impuretés U représentent une fraction molaire de moins de 5% du composé.

Il pourra par exemple être utilisé des oxydes métalliques dits purs, c'est-à-dire où la fraction molaire i d'impureté U est inférieure à 1%.

Parmi les impuretés U pouvant être présentes dans l'oxyde métallique de la tablette, peuvent être classés en trois catégories : impuretés organiques, métalliques ou particulaires. Ces impuretés peuvent être de nature moléculaire, ionique ou atomique.

On peut par exemple citer :

- comme impuretés particulaires : les particules de silice, d'argiles de type aluminosilicates, de cendres et de fumées ;
- comme impuretés métalliques : le calcium, le nickel, le magnésium, l'or, les hydroxydes de ces même oxydes, etc. à raison de $10^{10}$ atomes/cm$^2$ d'oxyde ;
- comme impuretés organiques : les sulfures et carbonates de ces oxydes.

Lorsque l'impureté U est métallique, elle est différente du métal M.

Des exemples particuliers et non-limitatifs d'oxydes métalliques pouvant être compactés selon le procédé proposé sont les suivants : $Fe_2O_3$ / $Fe_3O_4$ / $MnO$ / $TiO_2$ / $Al_2O_3$ / $ZnO$ / $Fe_{(1-x)}S.Fe(OH)_2$ / $Zn_4Si_2O_7(OH)_2$, $H_2O$.

Les composés utilisés pour fabriquer la tablette compactée peuvent par exemple être des déchets et sous-produits provenant de l'industrie, par exemple l'industrie sidérurgique, et/ou être des produits naturels provenant par exemple de mines ou de carrières.

Ces composés à compacter se présentent généralement sous forme de particules mais peuvent aussi être sous forme de roches. En effet, l'un des avantages importants du procédé mis en œuvre est qu'il permet de réaliser des produits compactés à partir de particules ayant une répartition granulométrique large, et qu'il n'est donc pas nécessaire d'avoir des particules ayant une granulométrie centrée sur une valeur particulière comme cela est le cas pour les procédés de l'art antérieur.

De manière préféré, il est possible de former la tablette compactée à partir de particules d'oxydes métallique allant de quelques micromètres à plusieurs millimètres, par exemple une granulométrie large répartie entre 15 $\mu$m et 6 mm. On pourrait compacter des particules ayant une granulométrie plus resserrée, par exemple comprise entre 40 $\mu$m et 3 mm ou entre 40 $\mu$m et 1 mm

Dans une forme de réalisation avantageuse, les particules de composition d'oxydes métalliques présentent avant compactage un diamètre $d_{90}$ inférieur ou égal à 3 mm. On entend par $d_{90}$ que 90% de la population des particules ont une taille inférieure au diamètre cité précédemment.

Selon un exemple additionnel, les particules de composition d'oxydes métalliques présentent de préférence avant compactage un diamètre $d_{10}$ inférieur ou égal à quelques dizaines de micromètres, par exemple inférieur à 20 $\mu$m. On entend par $d_{10}$ que 10% de la population des particules ont une taille inférieure au diamètre cité précédemment.

La tablette compactée peut consister en des composés d'un seul type d'oxyde métallique, ou être un mélange de plusieurs oxydes métalliques différents.

Ces tablettes compactées peuvent être mono- ou multicouches, chaque couche étant exclusivement formée d'un ou plusieurs composés d'oxydes métalliques compactés entre eux.

Les tablettes multicouches offrent des avantages certains. Elles permettent d'isoler au sein d'une même structure solide des composés incompatibles entre eux d'un point de vue physicochimique et/ou de séquencer dans le temps l'action de certains composés (libérer un actif à un moment ou un lieu différent : rôle dans la cinétique réactionnelle).

Comme on l'a précisé plus haut, la tablette compactée présente des caractéristiques favorisant sa manipulation et son stockage, ainsi que sa réutilisation ultérieure en vue du recyclage des oxydes métalliques notamment.

Ainsi, la tablette compactée a une densité apparente supérieure ou égale à 2, de préférence supérieure à 2,8, plus préférentiellement supérieure à 3.

La densité apparente est connue à partir de la masse volumique apparente de la tablette, c'est-à-dire le rapport entre la masse de la tablette par rapport à son volume apparent (incluant le volume d'air interstitiel), que l'on rapporte à la masse volumique de l'eau (1 g/cm3).

Ainsi, la tablette compactée a une masse volumique apparente supérieure ou égale à 2 g/cm3, de préférence supérieure à 2,8 g/cm3, plus préférentiellement supérieure à 3 g/cm3.

Selon un mode de réalisation, la composition consiste en un mélange d'oxyde de manganèse uniquement. Une telle composition peut être formée à partir d'un unique type d'oxyde de manganèse, ou de plusieurs types d'oxyde de manganèse différents. Le ou les oxydes de manganèse sont par exemple choisis parmi : MnO, MnO2, Mn2O3, Mn2O7.

Dans ce cas, ladite composition à base d'oxyde de manganèse mis sous forme d'une tablette compactée de forme tridimensionnelle a une densité apparente comprise entre 2 et 5, et de préférence entre 2,8 et 4,2.

Pour former une telle tablette, on utilise de préférence des particules d'oxyde de manganèse ayant un diamètre réparti entre 40 $\mu$m et 2 mm. Selon un procédé de compaction particulier, on utilise des particules d'oxyde de manganèse ayant un diamètre inférieur ou égal à 250 $\mu$m, de préférence un diamètre compris entre 40 $\mu$m et 250 $\mu$m.

Selon un autre mode de réalisation la composition consiste en un mélange d'oxyde de fer uniquement. Une telle composition peut être formée à partir d'un unique type d'oxyde de fer, ou de plusieurs types d'oxyde de fer différents. Le ou les oxydes de fer sont par exemple choisis parmi : FeO, Fe2O3, Fe3O4.

Dans ce cas, ladite composition à base d'oxyde de fer sous forme d'une tablette compactée de forme tridimensionnelle a une densité apparente comprise entre 2 et 5, et de préférence entre 2,8 et 4,4. Pour former une telle tablette, on utilise de préférence des particules d'oxyde de fer ayant un diamètre réparti entre 15 $\mu$m et 1 mm , de préférence de 15 $\mu$m à 500 $\mu$m. Selon un procédé de compaction particulier, on utilise des particules d'oxyde de fer ayant un diamètre inférieur ou égal à 50 $\mu$m.

Selon encore un mode de réalisation, la composition consiste en un mélange d'oxyde de manganèse (d'un ou plusieurs types d'oxyde de manganèse) avec un ou plusieurs autres types d'oxyde métallique, où le métal est choisi parmi les métaux pauvres et les métaux de transition, de préférence à l'exclusion du chrome. De préférence, le ou les oxydes de manganèse sont majoritaires dans la composition (c'est-à-dire supérieurs à 50% en masse), de préférence encore supérieurs à 70% en masse.

Selon encore un mode de réalisation, la composition consiste en un mélange d'oxyde de fer (d'un ou plusieurs types d'oxyde de fer) avec un ou plusieurs autres types d'oxyde métallique, où le métal est choisi parmi les métaux pauvres et les métaux de transition, de préférence à l'exclusion du chrome. De préférence, le ou les oxydes de fer sont majoritaires dans la composition (c'est-à-dire supérieurs à 50% en masse), de préférence encore supérieurs à 70% en masse.

En outre, la tablette compactée présente de préférence une répartition de densité homogène au sein de la tablette. Le procédé de compaction proposé utilisant une presse uniaxiale permet en effet de former des tablettes où la densité est sensiblement la même selon la direction longitudinale (c'est-à-dire selon l'axe longitudinal de déplacement des poinçons) et selon la direction transversale (c'est-à-dire perpendiculaire à l'axe longitudinal de déplacement des poinçons).

Il peut exister un faible gradient de densité selon la direction longitudinale notamment lorsqu'un seul des poinçons est en mouvement par rapport à l'autre, la densité la plus élevée se trouvant du côté du poinçon actif, et la densité la moins élevée se trouvant du côté opposé où le poinçon est inactif.

En tout état de cause, les écarts de densité selon la direction longitudinale sont très faibles, au maximum de 0.2 par exemple pour des composés faiblement compressibles (type Fe3O4), et de préférence au maximum de 0.05 par exemple pour les composés fortement compressibles (type MnO).

La tablette compactée a en outre de préférence une résistance à la rupture diamétrale supérieure ou égale à 250 kPa, de préférence supérieure à 350 kPa, plus préférentiellement supérieure à 500 kPa.

Pour déterminer la résistance à la rupture diamétrale, on procède à la mesure de dureté de la tablette selon la plus grande dimension de la tablette (souvent le diamètre pour une tablette sensiblement cylindrique). Pour ce faire, on applique une force diamétrale jusqu'à la rupture de la tablette. Un duromètre de type DR. SCHLEUNIGER 8M est utilisé pour réaliser ces mesures de dureté. Cette force de rupture est convertie en pression pour s'affranchir de la dimension des pastilles. La résistance à la rupture diamétrale est calculée par la formule : Rd (kPa) = 2000*force rupture (en N) divisée par l'aire de la couronne sollicité (en mm$^2$).

La tablette compactée présente en outre un certain volume facilitant sa manipulation. De préférence, elle a un volume supérieur ou égal à 350 mm3.

Dans une forme de réalisation avantageuse, les tablettes ont une forme régulière, par exemple choisie dans le groupe des cylindres parallélépipèdes, et ont un diamètre compris entre 10 mm et 100 mm. De manière préférée, le diamètre est supérieur ou égal à 15 mm, de préférence encore supérieur ou égal à 20 mm. Préférentiellement le diamètre est inférieur ou égal à 70 mm, de préférence inférieur ou égal à 50 mm.

La tablette a de préférence une hauteur comprise entre une valeur égale au tiers du diamètre et une valeur égale au diamètre. De préférence la hauteur de la tablette est égale à la moitié du diamètre de la tablette.

Par exemple on peut prévoir une tablette ayant une hauteur de 3 mm pour un diamètre de 10 mm, ou une tablette ayant une hauteur de 16 mm pour un diamètre de 32 mm.

Selon un mode de réalisation, les tablettes compactées ont une masse moyenne par compact d'au moins 3 g, de préférence d'au moins 5 g, de manière préférentielle d'au moins 10 g. Dans un mode préféré, les compacts présentent toutefois une masse moyenne par tablette inférieure ou égale à 200 g, de préférence inférieure ou égale à 150 g, de manière préférentielle inférieure ou égale à 100 g, et en particulier inférieure ou égale à 50 g.

Avantageusement, les tablettes compactées présentent une porosité apparente comprise entre 3% et 40%, préférentiellement entre 5% et 30%, et de préférence encore inférieure ou égale à 25%.

La porosité apparente d'une tablette correspond au rapport entre le volume non occupé par de la matière solide (les pores) et le volume total de la tablette, c'est-à-dire le volume apparent.

La porosité apparente résulte de la différence entre la densité théorique (dite densité vraie) du matériau à compacter et sa densité réelle dans le produit final, c'est-à-dire la densité apparente. Elle se calcule de la façon suivante :

$$\text{Porosité apparente} = 1 - (\text{densité apparente du compact} / \text{densité théorique du matériau à compacter}).$$

De nombreuses propriétés (mécaniques, thermiques, électriques, etc.) dépendent du taux de porosité et de la taille et répartition des pores. Il est donc important de pouvoir quantifier ces paramètres.

La gamme de porosité des tablettes compactées présentées permet d'améliorer leurs propriétés mécaniques ainsi que leur résistance au vieillissement. En effet, une porosité faible permet d'une part de densifier la pastille ce qui est en faveur de meilleures propriétés mécaniques et d'autre part de réduire les échanges entre la pastille et le milieu extérieur (humidité et oxygène de l'air) et donc de favoriser une meilleure conservation des pastilles (limiter les réactions d'oxydation en surface et d'hydratation).

La qualité de la tablette compactée formée peut aussi être évaluée par le « test de chute ». Par résistance au test de chute on entend le pourcentage massique de particules ayant un diamètre moyen inférieur à 10 mm, générées à l'issu de 2 chutes de 2 m au départ de 5 kg de produit compacté et tombant sur une plaque de PVC. Les tablettes compactées selon le procédé mis en oeuvre présentent une résistance au test de chute inférieure à 15%, de préférence inférieure à 10%.

Les tablettes compactées produites sont exemptes de macrodéfauts tels que fissures, cracks ou plans de clivage à la différence des produits sous forme de briquettes et analogues qui contiennent des fissures de quelques centaines de micromètres à quelques millimètres de long pour une largeur de quelques micromètres à quelques centaines de micromètres de large qui peuvent être facilement mis en évidence par une simple observation à l'œil, au microscope optique ou bien au microscope électronique à balayage (MEB).

De manière avantageuse, les propriétés mécaniques des tablettes ne sont pas dégradées dans le temps ou restent compatibles avec l'application.

Pour former à partir de particules d'oxydes métalliques une telle tablette compactée, consistant uniquement en un mélange d'oxydes métalliques, c'est à dire sans autres composés, on utilise une presse rotative à poinçons fonctionnant à hautes pressions de compaction.

En principe, le système de compaction comprend un plateau rotatif ayant des cavités formant des matrices à l'intérieur desquelles peuvent coulisser un ou deux poinçons, ces éléments formant un espace de confinement dans lequel la composition est placée pour compaction.

C'est l'action des poinçons qui exerce la contrainte de compaction nécessaire à la formation du compact. Cette contrainte de compaction appliquée peut consister à amener la composition à une pression de compaction déterminée, et à éventuellement maintenir cette pression de compaction pendant un temps de compaction déterminé. On peut également chercher à amener la composition à un volume de compaction déterminé, et éventuellement à la maintenir à ce volume déterminé pendant un certain temps.

La géométrie et le fonctionnement d'une presse rotative permet une meilleure transmission de l'effort sur le produit à compacter, ce qui engendre une meilleure homogénéisation de la distribution de densité dans le compact et donc une meilleure résistance mécanique et moins de défauts structurels.

Par ailleurs, le procédé de compaction proposé utilisant une presse rotative permet de compacter des particules d'oxydes métalliques ayant une distribution granulométrique aléatoire.

On peut en effet compacter des particules d'oxydes métalliques ayant une répartition granulométrique large, par opposition aux procédés de l'art antérieur où la répartition granulométrique des particules à compacter est centrée sur une valeur granulométrique particulière. Par répartition granulométrique large, on entend une distribution dans laquelle le rapport entre les diamètres équivalents de particules de plus grande taille et de plus petite taille est supérieur à 50 et dans laquelle l'allure de la distribution des tranches granulométriques la constituant peut considérablement varier.

Le procédé de fabrication proposé comprend les étapes successives suivantes :

E1. Prélèvement d'une composition consistant en un mélange d'un ou plusieurs oxydes métalliques sous forme de particules;

E2. Placement de ladite composition dans un espace confiné entre deux poinçons ;

E3. Compaction de ladite composition par rapprochement des poinçons exerçant une contrainte de compaction sur la composition afin de former une tablette compactée de forme tridimensionnelle ;

E4. Relâchement de la contrainte de compaction par éloignement des poinçons.

Comme précisé plus haut, la contrainte de compaction peut consister à appliquer une pression de compaction déterminée sur la composition. Pour former des tablettes compactée présentant les propriétés requises, la pression de compaction est par exemple comprise entre 100 MPa et 800 MPa, de préférence comprise entre 200 MPa et 650 MPa, de manière plus préférentielle comprise entre 300 MPa et 500 MPa, et de manière encore plus préférentielle comprise entre 350 MPa et 450 MPa.

Une telle pression est de préférence appliquée de façon instantanée.

La contrainte de compaction peut aussi consister à maintenir la composition à un volume de compaction déterminé pendant un temps déterminé. De préférence, le volume de compaction est maintenu à un volume déterminé pendant une durée comprise entre 100 ms et 5000 ms, et plus typiquement entre 500 ms et 1000 ms.

Selon un mode de réalisation particulier, le procédé de compaction est adapté pour former un produit compacté multicouches, c'est-à-dire comportant plusieurs couches différentes, où chaque couche consiste en un mélange d'un ou plusieurs oxydes métalliques étant sous la forme d'une tablette compactée.

Pour ce faire, chaque couche formant la structure multicouches peut par exemple être formée en effectuant successivement les étapes E1, E2, E3 et E4, où chaque nouvelle couche est formée sur la tablette compactée à l'étape précédente.

Plus précisément, la fabrication d'un tel produit compacté multicouche peut être effectuée en réalisant les étapes successives suivantes :

- On forme une première couche en effectuant les étapes E1, E2, E3 et E4 avec une première composition consistant en un mélange d'un ou plusieurs oxydes métalliques pour créer une première tablette compactée ;
- On forme une couche complémentaire en effectuant les étapes E1, E2, E3 et E4 où :

  ○ A l'étape E1, on prélève une composition complémentaire consistant en un mélange d'un ou plusieurs oxydes métalliques ;
  ○ A l'étape E2, on place la composition complémentaire dans l'espace confiné entre deux poinçons sur la première tablette compactée ;
  ○ A l'étape E3, on compacte la composition complémentaire et la première tablette compactée par rapprochement des poinçons exerçant une contrainte de compaction sur la composition afin de former une tablette compactée complémentaire sur la première tablette compactée ;

- On réitère la formation d'une couche complémentaire en fonction du nombre de couches souhaitées dans le produit compacté multicouches.

Le procédé de fabrication proposé présente l'avantage de créer des produits compactés multicouches ayant plusieurs couches juxtaposées et directement accessibles.

L'utilisation d'une presse rotative pour former les produits compactés à base d'oxyde métalliques permet une meilleure maîtrise de la cinétique et de la cinématique de compaction avec la possibilité de pré-tassage et/ou de pré-compaction permettant de mieux densifier la poudre et de chasser l'air évitant ainsi la formation de défauts tels que le clivage ou le décalottage.

En outre, il offre la possibilité d'une lubrification externe, c'est-à-dire une lubrification des poinçons et des matrices, qui est plus économique. (Typiquement 0,01% de lubrifiant au lieu des 0,25% à 1% de lubrifiant utilisé habituellement dans la poudre). Cela évite en outre d'ajouter des composés complémentaires dans la composition à compacter, ce qui peut dénaturer cette composition.

Une fois que le produit compacté a été formé ayant une seule couche ou plusieurs couches, on éjecte à une étape E5 le produit compacté en dehors de l'espace confiné.

Le procédé selon la présente invention peut en outre comporter une étape supplémentaire E6 consistant en un traitement thermique de la tablette compactée ou du produit compacté multicouches, à une température constante comprise entre 900°C et 1400°C, pendant quelques minutes à quelques heures.

Le procédé de fabrication proposé est particulièrement avantageux pour les raisons suivantes :

- la tablette compactée formée présente une densité suffisante pour être utilisée dans des applications métallurgiques, comme par exemple dans des convertisseurs ;
- la tablette compactée formée a une intégrité physique suffisante pour que le produit puisse être manipulé et stocké sans être dégradé, ou en ayant des pertes minimes ;
- le procédé est simple, notamment en ce que le nombre d'étape pour former le produit final à partir de la récupération des composés d'oxydes métalliques de base est réduit au minimum.

Le produit compacté ainsi formé étant constitué uniquement de composés d'oxydes métalliques, il peut être utilisé dans de nombreuses applications industrielles. Il peut ainsi être utilisé dans des applications de sidérurgie, mais également dans le traitement des gaz de fumées, dans le traitement des eaux, dans le traitement des boues et eaux usées, dans l'agriculture, la construction et le génie civil.

Le tableau 1 ci-après présente un certain nombre d'exemples de réalisation où des tablettes compactées contenant un oxyde métallique ont été fabriquées selon le procédé de compaction décrit.

L'échantillon à compacter, sous forme d'un mélange de particules, a été chargé dans une matrice et compacté à l'aide d'une presse uniaxiale fabriquée par Eurotab Technologie selon les caractéristiques décrites dans le Tableau 1. La matrice présentait un diamètre de 16 mm, et les poinçons avaient une surface de compaction plane, formant ainsi des tablettes de forme cylindrique. La granulométrie des particules indiquée correspond à la taille maximale des particules d'oxyde métallique utilisées.

Les caractéristiques des tablettes obtenues après compaction sont également données dans le Tableau 1.

La dureté diamétrale est mesurée sur un duromètre Dr Schleuniger. On applique une force diamétralement jusqu'à rupture du compact. Cette force de rupture est convertie en pression pour s'affranchir de la dimension des pastilles.

La résistance diamétrale est calculée par la formule : Rd (kPa) = 2000*force rupture (en N) divisée par l'aire de la couronne sollicité (en mm$^2$).

Le test de chute a été effectué comme décrit plus haut.

**Tableau 1**

| | | Essai n°1 | Essai n°2 | Essai n°3 | Essai n°4 | Essai n°5 |
|---|---|---|---|---|---|---|
| Caractéristiques échantillon à compacter | Type Oxyde Métallique | MnO | MnO | MnO | Fe3O4 | Fe3O4 |
| | Granulométrie des particules ($\mu$m) | <250$\mu$m | <250$\mu$m | <250$\mu$m | <50$\mu$m | <50$\mu$m |
| | Masse compactée (g) | 4,5 | 4,5 | 4,5 | 8,6 | 8,6 |
| Caractéristiques compaction | Hauteur de la tablette (mm) | 7,6 | 6,85 | 5,94 | 11,3 | 11,3 |
| | Vitesse rapprochement poinçons (mm/s) | 150 | 150 | 150 | 30 | 30 |
| | Temps (s) de maintien à volume constant | 0 | 0 | 0 | 0 | 5 |
| | Pression de compaction (Mpa) | 144 | 288 | 587 | 730 | 730 |
| Caractéristiques tablette compactée | Densité apparente | 2,95 | 3,26 | 3,77 | 3,8 | 3,81 |
| | Dureté diamétrale (N) | 128 | 379 | > 800 | 52 | 78 |
| | Résistance diamétrale (kPa) | 671 | 2200 | > 5360 | 178 | 276 |
| | Test de chute | 5% | < 3% | < 3% | Non mesuré | 14% |

Il a également été réalisé des essais comparatifs pour mettre en avant les différences entre les produits compactés sous forme de briquettes réalisés selon des procédés de l'art antérieur, notamment par une presse à rouleaux tangentiels, et les tablettes compactées selon le procédé proposé.

Le tableau 2 ci-après récapitule ces essais complémentaires.

La briquette formée par ce procédé a une forme d'ellipsoïde, avec une longueur d'environ 25 mm, une largeur d'environ 15 mm, et une épaisseur d'environ 8 mm.

La presse à rouleaux tangentiels utilisée pour les essais est le micro-compacteur MP1 150/30 avec granulateur SC 100 commercialisé par la société SAHUT CONREUR.

Les briquettes ont été réalisées selon une vitesse de rotation des rouleaux d'environ 20 tours/minute (à +/- 5 tours/minute pour tenter d'obtenir les "plus belles" briquettes possibles) et une vitesse du pré-compacteur d'environ 100 tours/minute (à +/-20 tours/minute en fonction du niveau de matière première dans le réservoir), avec une puissance fournie par le moteur correspondant à un ampérage maximum de 3.4 A.

**Tableau 2**

|  |  | Essai n°6 | Essai n°7 |
|---|---|---|---|
| Caractéristiques échantillon à compacter | Type Oxyde Métallique | MnO | Fe3O4 |
|  | Granulométrie des particules ($\mu$m) | <250$\mu$m | <50$\mu$m |
|  | Masse compactée (g) | 9 | 8,9 |
| Caractéristiques compaction | Vitesse du pré-compacteur (tours/min) | 100 (+/- 20) | 100 (+/- 20) |
|  | Vitesse de rotation des roues (tours/minutes) | 20 (+/- 5) | 20 (+/-5) |
|  | Force linéaire de compaction (kN) | 75 | 75 |
|  | Temps de maintien (s) | 0 | 0 |
| Caractéristiques briquette | Densité apparente | 2,83 | 3,1 |
|  | Dureté diamétrale (N) | 90 | 65 |
|  | Résistance diamétrale (kPa) | 180 | 176 |
|  | Test de chute | 60% | 90% |

Les tableaux 1 et 2 font ressortir que les tablettes compactées selon le procédé proposé ont des caractéristiques, notamment en termes de dureté, résistance et de test de chute, bien supérieures à celles des briquettes de même composition mais formées avec les procédés de l'art antérieur.

Par ailleurs, le procédé proposé présente l'avantage de pouvoir être facilement adapté pour modifier ces caractéristiques finales du produit compacté. En comparant les essais n°4 et n°5, on constate en effet qu'il suffit de maintenir le volume de compaction à un volume constant pendant quelques secondes pour produire une tablette compactée selon les caractéristiques requises.

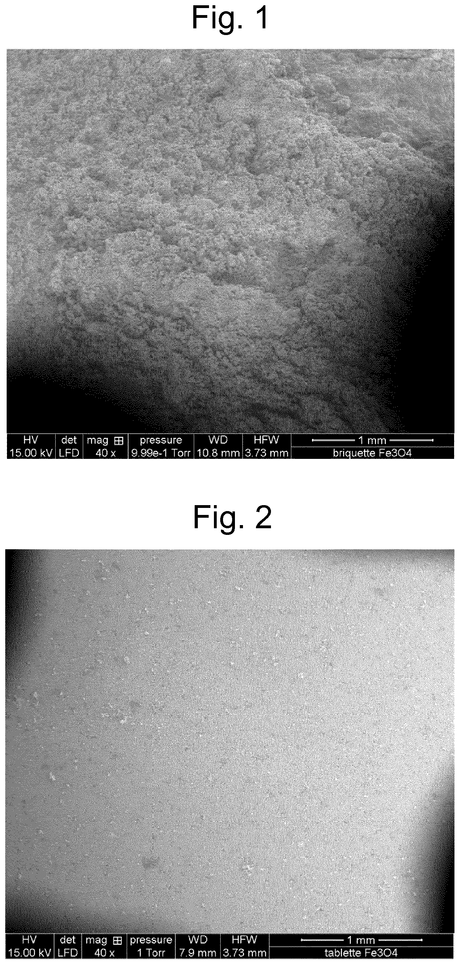

Les images MEB (acronyme de « Microscopie Electronique à Balayage ») des figures 1 à 10 permettent également de caractériser les différences structurelles entre les briquettes formées par les procédés de l'art antérieur et les produits compactés formés avec le procédé proposé.

Les figures 1 et 2 sont des images MEB de la surface d'une briquette et d'une tablette compactée respectivement, à base de Fe3O4. On constate que la surface de la tablette compactée est beaucoup plus lisse et présente moins de défauts de surface que la briquette.

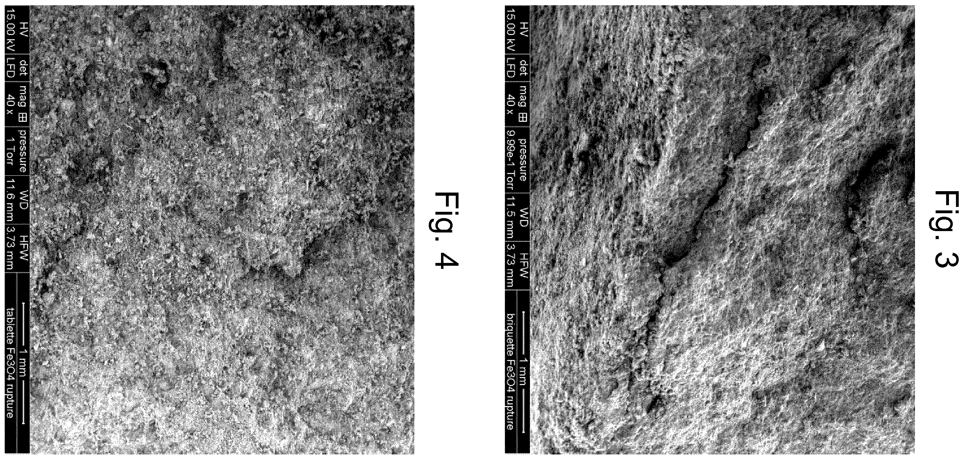

Les figures 3 et 4 sont des images MEB illustrant l'intérieur de cette briquette et cette tablette compactée respectivement, à base de Fe3O4, selon un agrandissement de 40 fois. Il est apparent que la tablette compactée présente une meilleure homogénéité de structure. En outre, on constate qu'il y a des défauts structurels à l'intérieur de la briquette, illustrés notamment par les faciès de rupture apparents.

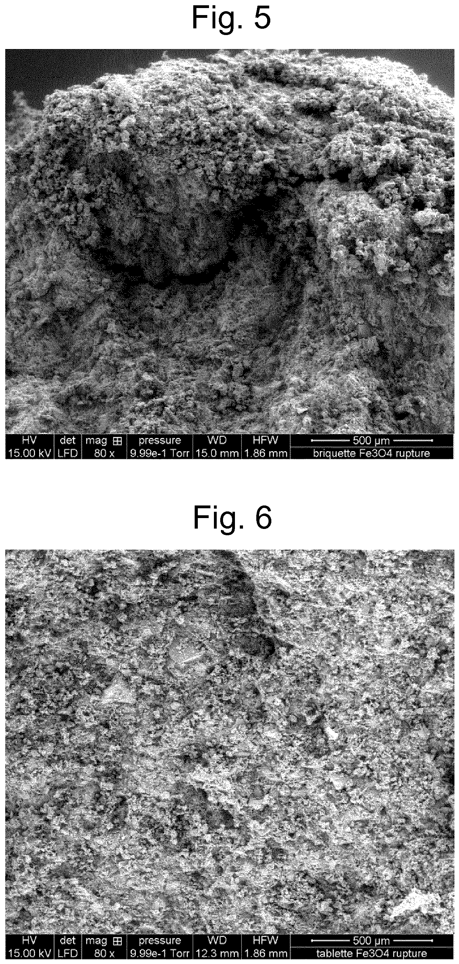

Les figures 5 et 6 qui sont également des images MEB illustrant l'intérieur de cette briquette et cette tablette compactée respectivement, à base de Fe3O4, mais selon un agrandissement de 80 fois, viennent confirmer ces différences structurelles. En effet, alors que la tablette compactée présente toujours une structure très homogène et uniforme, on voit que la structure de la briquette est très désordonnée, avec de nombreux défauts.

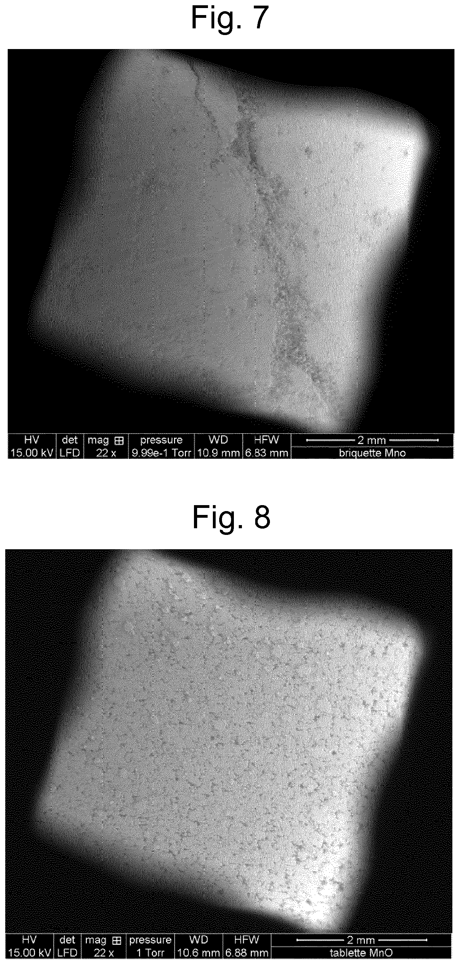

Les images MEB des figures 7 et 8 qui illustrent quant à elles la surface d'une briquette et d'une tablette compactée respectivement, à base de MnO, permettent de tirer les mêmes conclusions que précédemment. En effet, on constate que la surface de la briquette de MnO présente d'importants défauts de surface tandis que la tablette compactée de MnO a une surface homogène, sans réels défauts apparents.

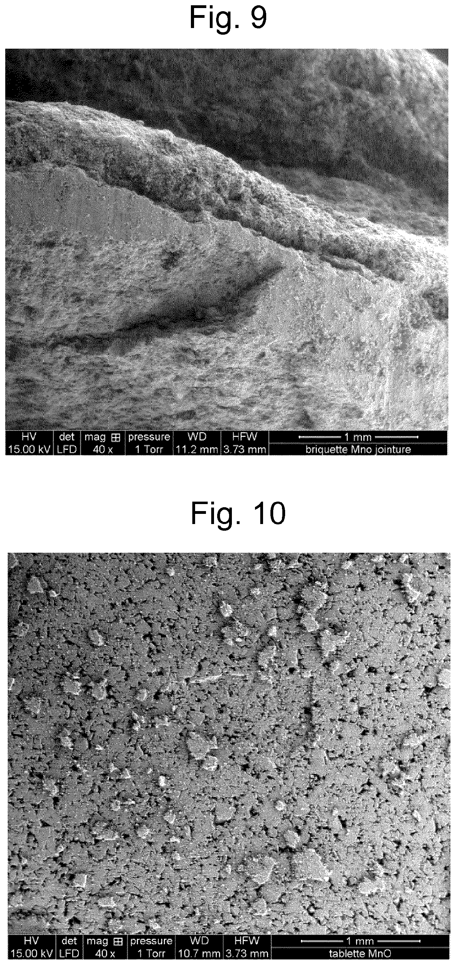

Par ailleurs, les images MEB des figures 9 et 10 illustrant l'intérieur de cette briquette et cette tablette compactée respectivement, à base de MnO, selon un agrandissement de 40 fois, montrent aussi que la structure interne de la tablette compactée est homogène et uniforme tandis que la briquette de MnO comprend d'importants défauts de structure.

**REFERENCES BIBLIOGRAPHIQUES**

- US 4,917,723
- EP 2 298 941
- DE 24 18 555
- DE 24 31 983
- EP 0 466 160

**Revendications**

1. Composition consistant en un mélange d'un ou plusieurs oxydes métalliques de formule MxOyUi, dans laquelle M est un atome métallique choisi parmi le fer, l'aluminium, le titane, le manganèse, le zinc, le cuivre, le zirconium, le nickel et le plomb , O est un atome d'oxygène, et U est une impureté, où x, y, i sont des fractions molaires comprises entre 0 et 1 avec x+y>80%, ladite composition étant sous forme d'une tablette compactée de forme tridimensionnelle ayant une densité apparente supérieure ou égale à 2, une porosité apparente comprise entre 3% et 40%, et une résistance à la rupture diamétrale supérieure ou égale à 250 kPa et une résistance au test de chute inférieure à 15%, la résistance au test de chute correspondant au pourcentage massique de particules ayant un diamètre moyen inférieur à 10 mm, générées à l'issu de deux chutes de 2 m au départ de 5 kg de produit compacté et tombant sur une plaque de chlorure de polyvinyle (PVC).

2. Composition selon la revendication 1, dans laquelle les oxydes métalliques sont sous forme de particules ayant un diamètre d90 inférieur ou égal à 3 mm.

3. Composition selon l'une quelconque des revendications 1 ou 2, dans laquelle les oxydes métalliques sont sous forme de particules ayant des diamètres selon une distribution granulométrique aléatoire dans laquelle le rapport entre les diamètres équivalents de particules de plus grande taille et de plus petite taille est supérieur à 50.

4. Composition selon l'une quelconque des revendications 1 à 3 formée d'un unique type d'oxyde métallique, ou consistant en un mélange d'oxyde de fer, un mélange d'oxyde d'aluminium, un mélange d'oxyde de titane, un mélange d'oxyde de manganèse, un mélange d'oxyde de zinc, un mélange d'oxyde de cuivre, un mélange d'oxyde de zirconium, un mélange d'oxyde de plomb, ou un mélange d'au moins deux des oxydes métalliques précités.

5. Composition selon l'une quelconque des revendications 1 à 3, consistant en un mélange d'oxyde de manganèse uniquement, ladite composition étant sous forme d'une tablette compactée de forme tridimensionnelle ayant une densité apparente comprise entre 2 et 5.

6. Composition selon l'une quelconque des revendications 1 à 3, consistant en un mélange d'oxyde de fer uniquement, ladite composition étant sous forme d'une tablette compactée de forme tridimensionnelle ayant une densité apparente comprise entre 2 et 5.

7. Composition selon l'une quelconque des revendications 1 à 3, consistant en un mélange d'oxyde de manganèse dans une quantité supérieure à 50% en masse avec un mélange d'un ou plusieurs autres types d'oxyde métallique.

8. Composition selon l'une quelconque des revendications 1 à 3, consistant en un mélange d'oxyde de fer dans une quantité supérieure à 50% en masse avec un mélange d'un ou plusieurs autres types d'oxyde métallique.

9. Composition selon l'une quelconque des revendications 1 à 8, ayant une résistance au test de chute inférieure à 10%, et de préférence inférieure à 5%.

10. Composition selon l'une quelconque des revendications 1 à 9, où la tablette compactée présente une porosité apparente comprise entre 5% et 30%, et de préférence comprise entre 10% et 25%.

11. Produit compacté ayant une structure multicouches, où chaque couche formant la structure multicouches est une tablette compactée selon la composition de l'une quelconque des revendications 1 à 10.

12. Procédé de fabrication d'une tablette compactée à partir d'une composition selon l'une quelconque des revendications 1 à 11 avec une presse rotative à poinçons, comprenant les étapes suivantes :

    E1. Prélèvement de la composition consistant en un mélange d'un ou plusieurs oxydes métalliques de formule MxOyUi, dans laquelle M est un atome métallique choisi parmi le fer, l'aluminium, le titane, le manganèse, le zinc, le cuivre, le zirconium, le nickel et le plomb, O est un atome d'oxygène, et U est une impureté, où x, y, i sont des fractions molaires comprises entre 0 et 1 avec x+y>80% ;
    E2. Placement de ladite composition dans un espace confiné entre deux poinçons ;
    E3. Compaction de ladite composition par rapprochement des poinçons exerçant une contrainte de compaction sur la composition afin de former une tablette compactée de forme tridimensionnelle, la pression de compaction étant comprise entre 200 MPa et 800 MPa ;

E4. Relâchement de la contrainte de compaction par éloignement des poinçons.

13. Procédé selon la revendication 12, dans lequel à l'étape E3 de compaction, la contrainte de compaction consiste à appliquer une pression de compaction déterminée sur la composition, la pression de compaction étant comprise entre 200 MPa et 650 MPa, de manière préférentielle comprise entre 300 MPa et 500 MPa, et de manière encore plus préférentielle comprise entre 350 MPa et 450 MPa, ou dans lequel à l'étape E3 de compaction, la contrainte de compaction consiste à maintenir la composition à un volume de compaction déterminé pendant une durée déterminé, le volume de compaction étant maintenu pendant une durée comprise entre 100 ms et 5000 ms, et de préférence comprises entre 500 ms et 1000 ms.

14. Procédé selon l'une quelconque des revendications 12 et 13, dans lequel les particules d'oxydes métalliques de l'étape E1 sont prélevées directement parmi des déchets industriels d'oxydes métalliques sans traitement préalable.

15. Procédé selon l'une quelconque des revendications 12 à 14 pour la fabrication d'un produit compacté ayant une structure multicouches, dans lequel chaque couche formant la structure multicouches est formée en effectuant successivement les étapes E1, E2, E3 et E4, où chaque nouvelle couche est formée sur la tablette compactée à l'étape précédente.

16. Procédé selon la revendication 15, dans lequel :

- On forme une première couche en effectuant les étapes E1, E2, E3 et E4 avec une première composition pour créer une première tablette compactée ;
- On forme une couche complémentaire en effectuant les étapes E1, E2, E3 et E4 où :

   ◦ A l'étape E1, on prélève une composition complémentaire consistant en un mélange d'un ou plusieurs oxydes métalliques,
   ◦ A l'étape E2, on place la composition complémentaire dans l'espace confiné entre deux poinçons sur la première tablette compactée ;
   ◦ A l'étape E3, on compacte la composition complémentaire et la première tablette compactée par rapprochement des poinçons exerçant une contrainte de compaction sur la composition afin de former une tablette compactée complémentaire sur la première tablette compactée ;

- On réitère la formation d'une couche complémentaire en fonction du nombre de couches souhaitées dans le produit compacté multicouches.

## Patentansprüche

1. Zusammensetzung, die aus einer Mischung von einem oder mehreren Metalloxiden mit der Formel $M_xO_yU_i$ besteht, wobei M ein Metallatom ist, das unter Eisen, Aluminium, Titan, Mangan, Zink, Kupfer, Zirkon, Nickel und Blei ausgewählt ist, O ein Sauerstoffatom ist und U ein Fremdstoff ist, wo x, y, i Molanteile sind, die zwischen 0 und 1 enthalten sind, wobei x+y>80%, wobei die Zusammensetzung in der Form einer verdichteten Tablette mit dreidimensionaler Form vorliegt, die eine scheinbare Dichte von größer oder gleich 2, eine scheinbare Porosität, die zwischen 3% und 40% enthalten ist, und eine diametrale Bruchfestigkeit von größer oder gleich 250 kPa und eine Fallfestigkeit von kleiner als 15% aufweist, wobei die Fallfestigkeit dem Massenprozentsatz der Partikel entspricht, die einen mittleren Durchmesser von kleiner als 10 mm aufweisen, die nach zwei Fallversuchen aus 2 m ausgehend von 5 kg verdichtetem Produkt, das auf eine Platte aus Polyvinylchlorid (PVC) fällt, erzeugt werden.

2. Zusammensetzung nach Anspruch 1, wobei die Metalloxide in der Form von Partikeln vorliegen, die einen D90-Durchmesser von kleiner oder gleich 3 mm aufweisen.

3. Zusammensetzung nach einem der Ansprüche 1 oder 2, wobei die Metalloxide in der Form von Partikeln vorliegen, die Durchmesser gemäß einer zufälligen Korngrößenverteilung aufweisen, in der das Verhältnis zwischen den äquivalenten Durchmessern von größeren und kleineren Partikeln größer als 50 ist.

4. Zusammensetzung nach einem der Ansprüche 1 bis 3, die aus einem einzigen Typ von Metalloxid gebildet ist oder aus einer Eisenoxidmischung, einer Aluminiumoxidmischung, einer Titanoxidmischung, einer Manganoxidmischung, einer Zinkoxidmischung, einer Kupferoxidmischung, einer Zirkonoxidmischung, einer Bleioxidmischung oder einer Mischung aus mindestens zwei von den vorhergehend genannten Metalloxiden besteht.

5. Zusammensetzung nach einem der Ansprüche 1 bis 3, die aus einer Mischung aus lediglich Manganoxid besteht, wobei die Zusammensetzung in der Form einer verdichteten Tablette mit dreidimensionaler Form vorliegt, die eine scheinbare Dichte aufweist, die zwischen 2 und 5 enthalten ist.

6. Zusammensetzung nach einem der Ansprüche 1 bis 3, die aus einer Mischung aus lediglich Eisenoxid besteht, wobei die Mischung in der Form einer verdichteten Tablette mit dreidimensionaler Form vorliegt, die eine scheinbare Dichte aufweist, die zwischen 2 und 5 enthalten ist.

7. Zusammensetzung nach einem der Ansprüche 1 bis 3, die aus einer Manganoxidmischung mit einer Menge von größer als 50 Massenprozent und einer Mischung aus einem oder mehreren anderen Typen von Metalloxid besteht.

8. Zusammensetzung nach einem der Ansprüche 1 bis 3, die aus einer Eisenoxidmischung mit einer Menge von größer als 50 Massenprozent und einer Mischung aus einem oder mehreren anderen Typen von Metalloxid besteht.

9. Zusammensetzung nach einem der Ansprüche 1 bis 8, die eine Fallfestigkeit von kleiner als 10% und vorzugsweise kleiner als 5% aufweist.

10. Zusammensetzung nach einem der Ansprüche 1 bis 9, wobei die verdichtete Tablette eine scheinbare Porosität aufweist, die zwischen 5% und 30% enthalten ist und vorzugsweise zwischen 10% und 25% enthalten ist.

11. Verdichtetes Produkt, das eine mehrschichtige Struktur aufweist, wobei jede Schicht, die die mehrschichtige Struktur bildet, eine verdichtete Tablette mit der Zusammensetzung nach einem der Ansprüche 1 bis 10 ist.

12. Verfahren zur Herstellung einer verdichteten Tablette ausgehend von einer Zusammensetzung nach einem der Ansprüche 1 bis 11 mit einer Rundläuferpresse mit Stempeln, das die folgenden Schritte umfasst:

    E1. Entnehmen der Zusammensetzung, die aus einer Mischung von einem oder mehreren Metalloxiden mit der Formel MxOyUi besteht, wobei M ein Metallatom ist, das unter Eisen, Aluminium, Titan, Mangan, Zink, Kupfer, Zirkon, Nickel und Blei ausgewählt ist, O ein Sauerstoffatom ist und U ein Fremdstoff ist, wo x, y, i Molanteile sind, die zwischen 0 und 1 enthalten sind, wobei x+y>80%;
    E2. Platzieren der Zusammensetzung in einem zwischen zwei Stempeln umschlossenen Raum;
    E3. Verdichten der Zusammensetzung durch Annäherung der Stempel, die eine Verdichtungsbelastung auf die Zusammensetzung ausüben, um eine verdichtete Tablette mit dreidimensionaler Form zu bilden, wobei der Verdichtungsdruck zwischen 200 MPa und 800 MPa enthalten ist;
    E4. Lockerung der Verdichtungsbelastung durch Entfernung der Stempel.

13. Verfahren nach Anspruch 12, wobei im Schritt E3 zum Verdichten die Verdichtungsbelastung darin besteht, einen bestimmten Verdichtungsdruck auf die Zusammensetzung auszuüben, wobei der Verdichtungsdruck zwischen 200 MPa und 650 MPa, vorzugsweise zwischen 300 MPa und 500 MPa, und, noch mehr zu bevorzugen, zwischen 350 MPa und 450 MPa, enthalten ist, oder wobei im Schritt E3 zum Verdichten die Verdichtungsbelastung darin besteht, die Zusammensetzung während einer bestimmten Dauer, die zwischen 100 ms und 5000 ms enthalten ist und vorzugsweise zwischen 500 ms und 1000 ms enthalten ist, in einem bestimmten Verdichtungsvolumen zu halten.

14. Verfahren nach einem der Ansprüche 12 und 13, wobei die Metalloxidpartikel von Schritt E1 direkt ohne Vorbehandlung von Metalloxid-Industrieabfällen entnommen werden.

15. Verfahren nach einem der Ansprüche 12 bis 14 zur Herstellung eines verdichteten Produkts, das eine mehrschichtige Struktur aufweist, wobei jede von den Schichten, die die mehrschichtige Struktur bilden, durch aufeinanderfolgendes Durchführen der Schritte E1, E2, E3 und E4 gebildet wird, wobei jede neue Schicht auf der im vorhergehenden Schritt verdichteten Tablette gebildet wird.

16. Verfahren nach Anspruch 15, wobei:

    - eine erste Schicht durch Durchführen der Schritte E1, E2, E3 und E4 mit einer ersten Zusammensetzung durchgeführt wird, um eine erste verdichtete Tablette zu bilden;
    - eine ergänzende Schicht durch Durchführen der Schritte E1, E2, E3 und E4 gebildet wird, wobei:

○ im Schritt E1 eine ergänzende Zusammensetzung entnommen wird, die aus einer Mischung aus einem oder mehreren Metalloxiden besteht,
○ im Schritt E2 die ergänzende Zusammensetzung im umschlossenen Raum zwischen zwei Stempeln auf der ersten verdichteten Tablette platziert wird;
○ im Schritt E3 die ergänzende Zusammensetzung und die erste verdichtete Tablette durch Annähern der Stempel verdichtet wird, die eine Verdichtungsbelastung auf die Zusammensetzung ausüben, um eine ergänzende verdichtete Tablette auf der ersten verdichteten Tablette zu bilden;

- die Bildung einer ergänzenden Schicht in Abhängigkeit von der Anzahl an gewünschten Schichten in dem mehrschichtigen verdichteten Produkt wiederholt wird.

**Claims**

1. Composition consisting of a mixture of one or more metal oxides of formula MxOyUi, wherein M is a metal atom selected from iron, aluminium, titanium, manganese, zinc, copper, zirconium, nickel and lead, O is an oxygen atom, and U is an impurity, where x, y, i are mole fractions comprised between 0 and 1 with x + y > 80%, said composition taking the form of a three-dimensional compacted tablet having an apparent density greater than or equal to 2, an apparent porosity comprised between 3% and 40%, and a diametral breaking strength greater than or equal to 250 kPa and a drop test resistance less than 15%, drop test resistance corresponding to the mass percentage of particles having an average diameter of less than 10 mm, generated at the outcome of two drops of 2 m starting with 5 kg of compacted product and falling on a polyvinyl chloride (PVC) plate.

2. Composition according to claim 1, wherein the metal oxides are in the form of particles having a diameter d90 less than or equal to 3 mm.

3. Composition according to any one of claims 1 or 2, wherein the metal oxides are in the form of particles having diameters according to a random particle size distribution in which the ratio between the equivalent diameters of particles of largest size and of smallest size is greater than 50.

4. Composition according to any one of claims 1 to 3 formed of a single type of metal oxide, or consisting of a mixture of iron oxide, a mixture of aluminium oxide, a mixture of titanium oxide, a mixture of manganese oxide, a mixture of zinc oxide, a mixture of copper oxide, a mixture of zirconium oxide, a mixture of lead oxide, or a mixture of at least two of the metal oxides cited above.

5. Composition according to any one of claims 1 to 3, consisting of a mixture of manganese oxide only, said composition taking the form of a three-dimensional compacted tablet having an apparent density comprised between 2 and 5.

6. Composition according to any one of claims 1 to 3, consisting of a mixture of iron oxide only, said composition taking the form of a three-dimensional compacted tablet having an apparent density comprised between 2 and 5.

7. Composition according to any one of claims 1 to 3, consisting of a mixture of manganese oxide in an amount greater than 50% by weight with a mixture of one or more other types of metal oxide.

8. Composition according to any one of claims 1 to 3, consisting of a mixture of iron oxide in an amount greater than 50% by weight with a mixture of one or more other types of metal oxide.

9. Composition according to any one of claims 1 to 8, having a drop test resistance less than 10%, and preferably less than 5%.

10. Composition according to any one of claims 1 to 9, wherein the compacted tablet has an apparent porosity comprised between 5% and 30%, and preferably comprised between 10% and 25%.

11. Compacted product having a multilayer structure, wherein each layer forming the multilayer structure is a compacted tablet according to the composition of any one of claims 1 to 10.

12. Method for manufacturing a compacted tablet from a composition according to any one of claims 1 to 11 with a rotary punch press, comprising the following steps:

E1. Taking the composition consisting of a mixture of one or more metal oxides of formula MxOyUi, wherein M is a metal atom selected from iron, aluminium, titanium, manganese, zinc, copper, zirconium, nickel and lead, O is an oxygen atom, and U is an impurity, where x, y, i are mole fractions comprised between 0 and 1 with x + y > 80%;

E2. Placing said composition in a confined space between two punches;

E3. Compaction of said composition by bringing together the punches and exerting a compaction stress on the composition in order to form a three-dimensional compacted tablet, the compaction pressure being comprised between 200 MPa and 800 MPa;

E4. Relaxation of the compaction stress by moving the punches apart.

13. Method according to claim 12, wherein in the compaction step E3, the compaction stress consists in applying a determined compaction pressure to the composition, the compaction pressure being comprised between 200 MPa and 650 MPa, preferentially comprised between 300 MPa and 500 MPa, more preferentially comprised between 350 MPa and 450 MPa, or wherein in the compaction step E3, the compaction stress consists in maintaining the composition at a determined compaction volume for a determined duration, the compaction volume being maintained for a duration comprised between 100 ms and 5000 ms, and preferably comprised between 500 ms and 1000 ms.

14. Method according to any one of claims 12 and 13, wherein the metal oxide particles of step E1 are taken directly from industrial metal oxide wastes without prior treatment.

15. Method according to any one of claims 12 to 14 for manufacturing a compacted product having a multilayer structure, wherein each layer forming the multilayer structure is formed by successively carrying out steps E1, E2, E3 and E4, wherein each new layer is formed on the tablet compacted in the previous step.

16. Method according to claim 15, wherein:

- A first layer is formed by carrying out steps E1, E2, E3 and E4 with a first composition to create a first compacted tablet;

- An additional layer is formed by carrying out steps E1, E2, E3 and E4 where:

  ◦ In step E1, an additional composition consisting of a mixture of one or more metal oxides is taken,
  ◦ In step E2, the additional composition is placed in the confined space between two punches on the first compacted tablet;
  ◦ In step E3, the additional composition and the first compacted tablet are compacted by bringing together the punches and exerting a compaction stress on the composition in order to form an additional compacted tablet on the first compacted tablet;

- The formation of an additional layer is repeated according to the number of layers desired in the compacted multilayer product.

# Fig. 1

| HV | det | mag ⊞ | pressure | WD | HFW | 1 mm |
|---|---|---|---|---|---|---|
| 15.00 kV | LFD | 40 x | 9.99e-1 Torr | 10.8 mm | 3.73 mm | briquette Fe3O4 |

# Fig. 2

| HV | det | mag ⊞ | pressure | WD | HFW | 1 mm |
|---|---|---|---|---|---|---|
| 15.00 kV | LFD | 40 x | 1 Torr | 7.9 mm | 3.73 mm | tablette Fe3O4 |

# Fig. 3

| HV | det | mag ⊞ | pressure | WD | HFW | 1 mm |
|---|---|---|---|---|---|---|
| 15.00 kV | LFD | 40 x | 9.99e-1 Torr | 11.5 mm | 3.73 mm | briquette Fe3O4 rupture |

# Fig. 4

| HV | det | mag ⊞ | pressure | WD | HFW | 1 mm |
|---|---|---|---|---|---|---|
| 15.00 kV | LFD | 40 x | 1 Torr | 11.6 mm | 3.73 mm | tablette Fe3O4 rupture |

# Fig. 5

| HV | det | mag ⊞ | pressure | WD | HFW | ⎯⎯ 500 µm ⎯⎯ |
| 15.00 kV | LFD | 80 x | 9.99e-1 Torr | 15.0 mm | 1.86 mm | briquette Fe3O4 rupture |

# Fig. 6

| HV | det | mag ⊞ | pressure | WD | HFW | ⎯⎯ 500 µm ⎯⎯ |
| 15.00 kV | LFD | 80 x | 9.99e-1 Torr | 12.3 mm | 1.86 mm | tablette Fe3O4 rupture |

# Fig. 7

| HV | det | mag ⊞ | pressure | WD | HFW | 2 mm |
|---|---|---|---|---|---|---|
| 15.00 kV | LFD | 22 x | 9.99e-1 Torr | 10.9 mm | 6.83 mm | briquette Mno |

# Fig. 8

| HV | det | mag ⊞ | pressure | WD | HFW | 2 mm |
|---|---|---|---|---|---|---|
| 15.00 kV | LFD | 22 x | 1 Torr | 10.6 mm | 6.88 mm | tablette MnO |

# Fig. 9

briquette Mno jointure

# Fig. 10

tablette MnO

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4917723 A
- EP 2298941 A
- DE 2418555
- DE 2431983
- EP 0466160 A

**Littérature non-brevet citée dans la description**

- The AISE Steel Foundation. **D.H. HUBBLE.** Steel Plant Refractories. 1999